# EUROPÄISCHE PATENTSCHRIFT

(11) **EP 4 259 716 B1**
(45) Veröffentlichungstag und Bekanntmachung des Hinweises auf die Patenterteilung: **29.07.2026**
(21) Anmeldenummer: 21814681.9
(22) Anmeldetag: 08.11.2021
(51) Int. Cl.: C08L 7/00, C08L 9/00, C08L 9/06, C08K 3/36, C08K 5/372, C08K 5/5415, C08K 5/5419, C08K 5/548

(54) **SCHWEFELVERNETZBARE KAUTSCHUKMISCHUNG, VULKANISAT UND FAHRZEUGREIFEN**
SULFUR-CROSSLINKABLE RUBBER MIXTURE, VULCANIZATE AND VEHICLE TYRE
MÉLANGE DE CAOUTCHOUC RÉTICULABLE AU SOUFRE, VULCANISAT ET PNEUMATIQUE DE VÉHICULE

(30) Priorität: 08.12.2020 DE 102020215465
(43) Veröffentlichungstag der Anmeldung: 18.10.2023
(73) Patentinhaber: Continental Reifen Deutschland GmbH, 30175 Hannover (DE)
(72) Erfinder: DAVIN, Julien, 30165 Hannover (DE); SCHÖFFEL, Julia, 30165 Hannover (DE); SCHAX, Fabian, 30165 Hannover (DE); WEBER, Christine, 30165 Hannover (DE); PUPPA, Marion, 30165 Hannover (DE)
(74) Vertreter: Continental Corporation
(86) Internationale Anmeldenummer: PCT/DE2021/200177
(87) Internationale Veröffentlichungsnummer: WO 2022/122089

(56) Entgegenhaltungen:
- EP-A1- 3 312 232
- EP-A1- 3 321 109
- EP-A1- 3 428 225
- EP-A1- 3 567 077
- EP-A1- 3 567 078
- US-A1- 2004 129 360
- US-A1- 2010 108 239

## Beschreibung

Die Erfindung betrifft eine schwefelvernetzbare Kautschukmischung, deren Vulkanisat und einen Fahrzeugreifen.

Die Kautschukzusammensetzungen der unterschiedlichen Bauteile bestimmen in hohem Maße die Fahreigenschaften und die Langlebigkeit eines Fahrzeugreifens.

Dabei haben die inneren Reifenbauteile bzw. deren Mischungen, auch als Body-Mischungen bezeichnet, ebenso einen Einfluss auf die Haltbarkeit und Langlebigkeit des Reifens wie der mit der Fahrbahn in Berührung kommende Laufstreifen. Unter den inneren Reifenbauteilen befinden sich bekanntermaßen auch solche, die Festigkeitsträger zur Verstärkung beinhalten, wie die Gürtellagen. Diese Festigkeitsträger sind von einer oder mehreren Kautschukmischungen ummantelt und somit gummiert. Die entsprechenden Kautschukmischungen werden auch als Gummierungsmischungen bezeichnet.

Eine derartige Gummierungsmischung ist beispielsweise in der EP 2746327 B1 offenbart. US 2004/129360 A1 offenbart eine Kautschukmischung für einen Reifengürtel, umfassend einen Naturkautschuk, einen Ruß und zudem ein spezifisches polysulfidisches Silan.

Bei den Gummierungsmischungen stehen wie auch generell bei inneren Reifenbauteilen unter anderem der Wärmeaufbau und die Haltbarkeit aufgrund von Beanspruchungen im Fahrbetrieb im Fokus.

Der vorliegenden Erfindung liegt die Aufgabe zugrunde, eine Kautschukmischung, insbesondere für innere Reifenbauteile und insbesondere zur Ummantelung von Festigkeitsträgern, bereitzustellen, die sich durch einen geringeren und damit verbesserten Wärmeaufbau und verbesserte Reißeigenschaften auszeichnet. Gleichzeitig soll die Kautschukmischung besser verarbeitbar sein.

Gelöst wird die Aufgabe durch eine Kautschukmischung, die die folgenden Bestandteile enthält:
- 50 bis 100 phr wenigstens eines Polyisoprens, welches ausgewählt ist aus der Gruppe bestehend aus natürlichem und synthetischem Polyisopren und
- 5 bis 500 phr wenigstens einer Kieselsäure und
- wenigstens ein Silan B mit der allgemeinen Summenformel I)

   I) (R¹)ₒSi-R²-Sₙ-R²-Si(R¹)ₒ

   wobei die beiden o unabhängig voneinander gleich oder verschieden sein können und jeweils einen Wert von 1, 2 oder 3 annehmen und die Reste R¹ unabhängig voneinander gleich oder verschieden voneinander sein können und ausgewählt sind aus Alkoxygruppen mit 1 bis 10 Kohlenstoffatomen, Cycloalkoxygruppen mit 4 bis 10 Kohlenstoffatomen, Phenoxygruppen mit 6 bis 20 Kohlenstoffatomen, Arylgruppen mit 6 bis 20 Kohlenstoffatomen, Alkylgruppen mit 1 bis 10 Kohlenstoffatomen, Alkenylgruppen mit 2 bis 20 Kohlenstoffatomen, Alkinylgruppen mit 2 bis 20 Kohlenstoffatomen, Aralkylgruppen mit 7 bis 20 Kohlenstoffatomen, Halogeniden oder Alkylpolyethergruppen -O-(R⁶-O)ᵣ-R⁵ wobei R⁶ gleich oder verschieden sind und verzweigte oder unverzweigte, gesättigte oder ungesättigte, aliphatische, aromatische oder gemischt aliphatisch/aromatische verbrückende C₁-C₃₀-Kohlenwasserstoffgruppen sind, vorzugsweise -CH₂-CH₂-, r eine ganze Zahl von 1 bis 30, vorzugsweise 3 bis 10 ist, und R⁵ unsubstituierte oder substituierte, verzweigte oder unverzweigte, terminale Alkyl-, Alkenyl-, Aryl- oder Aralkylgruppen, vorzugsweise -C₁₃H₂₇ Alkyl-Gruppe, sind
      oder
   zwei R¹ bilden eine cyclische Dialkoxygruppe mit 2 bis 10 Kohlenstoffatomen wobei dann o < 3 ist,
   oder es können zwei oder mehr Silane gemäß Formel I) über Reste R¹ verbrückt sein, und
   wobei die Bedingung gilt, dass in Formel I) in jeder (R¹)ₒSi-Gruppe wenigstens ein R¹ aus denjenigen oben genannten Möglichkeiten ausgewählt ist, bei der dieses R¹ i) über ein Sauerstoffatom an das Siliziumatom gebunden ist oder ii) ein Halogenid ist;
   und die Reste R² unabhängig voneinander gleich oder verschieden sein können und unverzweigte Alkylengruppen mit 6 bis 20 Kohlenstoffatomen, bevorzugt 6 bis 10 Kohlenstoffatomen, sind, und wobei n eine ganze Zahl von 2 bis 10 ist.

Überraschenderweise hat sich herausgestellt, dass mit der Kombination der genannten Bestandteile eine Verbesserung im Wärmeaufbau und den Reißeigenschaften erzielt werden kann.

Ein weiterer Gegenstand der vorliegenden Erfindung ist ein Vulkanisat wenigstens einer erfindungsgemäßen Kautschukmischung.

Ein weiterer Gegenstand der vorliegenden Erfindung ist ein Fahrzeugreifen, der wenigstens ein erfindungsgemäßes Vulkanisat der erfindungsgemäßen Kautschukmischung in wenigstens einem Bauteil aufweist.

Bevorzugt weist der erfindungsgemäße Fahrzeugreifen das erfindungsgemäße Vulkanisat insbesondere als Gummierungsmischung, insbesondere als Stahlcordgummierung und/oder Gürtelgummierung, und/oder in der Seitenwand und/oder im Laufstreifens und/oder in einem sonstigen Reifenbauteil, wie insbesondere einem Gürtelpolster, auf.

Gemäß vorteilhafter Ausführungsformen der Erfindung weist der Fahrzeugreifen wenigstens ein erfindungsgemäßes Vulkanisat zumindest in einem inneren Bauteil, wie insbesondere als Gummierungsmischung, wie insbesondere als Gürtelgummierung, und/oder als Gürtelpolster auf.

Die erfindungsgemäße Kautschukmischung ist aber prinzipiell ebenso für die Seitenwand und/oder den Laufstreifen geeignet.

Das erfindungsgemäße Vulkanisat und der erfindungsgemäße Fahrzeugreifen zeichnen sich insbesondere durch eine verbesserte Haltbarkeit und Langlebigkeit aus.

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Die erfindungsgemäße Kautschukmischung ist ferner auch für andere technische Gummiartikel, wie Bälge, Förderbänder, Luftfedern, Gurte, Riemen oder Schläuche, sowie Schuhsohlen geeignet.

Im Folgenden werden die Bestandteile der erfindungsgemäßen schwefelvernetzbaren Kautschukmischung näher beschrieben. Sämtliche Ausführungen gelten auch für das erfindungsgemäße Vulkanisat und den erfindungsgemäßen Fahrzeugreifen, der wenigstens ein erfindungsgemäßes Vulkanisat der erfindungsgemäßen Kautschukmischung in wenigstens einem Bauteil aufweist.

Von der Erfindung sind sämtliche vorteilhafte Ausgestaltungen, die sich unter anderem in den Patentansprüchen wiederspiegeln umfasst. Insbesondere sind von der Erfindung auch Ausgestaltungen umfasst, die sich durch Kombination unterschiedlicher Merkmale, beispielsweise von Bestandteilen der Kautschukmischung, unterschiedlicher Abstufungen bei der Bevorzugung dieser Merkmale ergeben; sodass auch eine Kombination eines ersten als "bevorzugt" bezeichneten Merkmals oder im Rahmen einer vorteilhaften Ausführungsform beschriebenen Merkmals mit einem weiteren als z. B. "besonders bevorzugt" bezeichnetem Merkmal von der Erfindung erfasst ist, wenn sich technisch oder inhaltlich nicht ein anderes ergibt.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen Kautschuke bezogen mit einem Molekulargewicht M_{w} gemäß GPC von größer als 20000 g/mol.

Die in dieser Schrift verwendete Angabe phf (parts per hundred parts of filler by weight) ist dabei die in der Kautschukindustrie gebräuchliche Mengenangabe für Kupplungsagenzien für Füllstoffe.

Im Rahmen der vorliegenden Anmeldung bezieht sich phf auf die vorhandene Kieselsäure, das heißt, dass andere eventuell vorhandene Füllstoffe wie Ruß nicht in die Berechnung der Silanmenge mit eingehen.

Die erfindungsgemäße Kautschukmischung enthält 50 bis 100 phr, bevorzugt 70 bis 100 phr, besonders bevorzugt 75 bis 100 phr, zumindest eines Polyisoprens, welches ausgewählt ist aus natürlichem (NR) und synthetischem Polyisopren (IR).

Das oder die Polyisopren(e) weisen bevorzugt ein Gewichtsmittel Mw des Molekulargewichts gemäß GPC von 250000 bis 5000000 g/mol auf.

Bei dem natürlichen und/oder synthetischen Polyisopren sämtlicher Ausführungsformen kann es sich sowohl um cis-1,4-Polyisopren als auch um 3,4-Polyisopren handeln. Bevorzugt ist allerdings die Verwendung von cis-1,4-Polyisoprenen mit einem cis-1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, bei welchem der cis-1,4-Anteil im Naturkautschuk größer 99 Gew.-% ist.

Ferner ist auch ein Gemisch eines oder mehrerer natürlicher Polyisoprene mit einem oder mehreren synthetischen Polyisopren(en) denkbar.

Im Rahmen der vorliegenden Erfindung ist unter dem Begriff "Naturkautschuk" natürlich vorkommender Kautschuk zu verstehen, der von Hevea Gummibäumen und "Nicht-Hevea" Quellen gewonnen werden kann. Nicht-Hevea Quellen sind beispielsweise Guayule Sträucher und Löwenzahn wie beispielsweise TKS (Taraxacum kok-saghyz; Russischer Löwenzahn).

Für den Fall, dass die Kautschukmischung weniger als 100 phr NR und/oder IR enthält, enthält sie wenigstens einen weiteren Dienkautschuk.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Der weitere Dienkautschuk ist dabei bevorzugt ausgewählt aus der Gruppe bestehend aus epoxidiertem Polyisopren, Butadien-Kautschuk (BR), Butadien-Isopren-Kautschuk, lösungspolymerisiertem Styrol-Butadien-Kautschuk (SSBR), emulsionspolymerisiertem Styrol-Butadien-Kautschuk (ESBR), Styrol-Isopren-Kautschuk, Flüssigkautschuken mit einem Molekulargewicht M_{w} von größer als 20000 g/mol, Halobutyl-Kautschuk, Polynorbornen, Isopren-Isobutylen-Copolymer, Ethylen-Propylen-Dien-Kautschuk, NitrilKautschuk, Chloropren-Kautschuk, Acrylat-Kautschuk, Fluor-Kautschuk, SilikonKautschuk, Polysulfid-Kautschuk, Epichlorhydrin-Kautschuk, Styrol-Isopren-Butadien-Terpolymer, hydriertem Acrylnitrilbutadien-Kautschuk und hydriertem Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, und/oder Schuhsohlen zum Einsatz. Dabei finden die dem Fachmann für diese Kautschuke bekannten - im Hinblick auf Füllstoffe, Weichmacher, Vulkanisationssysteme und Zuschlagstoffe besonderen - Mischungszusammensetzungen bevorzugte Anwendung.

Gemäß vorteilhafter Ausführungsformen ist der weitere Dienkautschuk, insbesondere bei der Verwendung der Kautschukmischung in Fahrzeugreifen, ausgewählt aus der Gruppe bestehend aus Butadien-Kautschuk (BR), lösungspolymerisiertem Styrol-Butadien-Kautschuk (SSBR), emulsionspolymerisiertem Styrol-Butadien-Kautschuk (ESBR), Butylkautschuk (IIR) und Halobutylkautschuk.

Gemäß einer vorteilhaften Ausführungsform der Erfindung enthält die Kautschukmischung 75 bis 99 phr NR und 1 bis 25 phr BR, bevorzugt 75 bis 85 phr NR und 15 bis 25 phr BR, beispielsweise und insbesondere 80 phr NR und 20 phr BR.

Eine derartige Kautschukmischung ist besonders gut als Gummierungsmischung, insbesondere als Gürtelgummierung, geeignet, wobei die der Erfindung zugrunde liegende Aufgabe besonders gut gelöst wird.

Erfindungsgemäß enthält die Kautschukmischung 5 bis 500 phr wenigstens einer Kieselsäure.

Bei der Kieselsäure kann es sich um die dem Fachmann bekannten Kieselsäuretypen, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 400 m²/g, bevorzugt von 35 bis 350 m²/g, besonders bevorzugt von 85 bis 320 m²/g und ganz besonders bevorzugt von 120 bis 235 m²/g, und eine CTAB-Oberfläche (gemäß ASTM D 3765) von 30 bis 400 m²/g, bevorzugt von 30 bis 330 m²/g, besonders bevorzugt von 80 bis 300 m²/g und ganz besonders bevorzugt von 110 bis 230 m²/g, aufweist.

Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil^{®} VN3 (Handelsname) der Firma Evonik als auch hoch dispergierbare Kieselsäuren, so genannte HD-Kieselsäuren (z. B. Zeosil^{®} 1165 MP der Firma Solvay), zum Einsatz kommen.

Die erfindungsgemäße Kautschukmischung enthält gemäß einer bevorzugten Ausführungsform der Erfindung 20 bis 300 phr, bevorzugt 20 bis 250 phr, besonders bevorzugt 40 bis 150 phr und ganz besonders bevorzugt 40 bis 100 phr, insbesondere wiederum bevorzugt 50 bis 70 phr, wenigstens einer Kieselsäure.

Für den Fall, dass wenigstens zwei verschiedene Kieselsäuren, die sich z. B. durch ihre BET-Oberfläche unterscheiden, in der erfindungsgemäßem Kautschukmischung enthalten sind, beziehen sich die genannten Mengenangaben immer auf die Gesamtmenge aller enthaltenen Kieselsäuren.

Die Begriffe "Kieselsäure" und "Silika" werden im Rahmen der vorliegenden Erfindung synonym verwendet.

Die erfindungsgemäße Kautschukmischung kann ferner wenigstens einen Ruß, insbesondere einen Industrieruß enthalten.

Als Ruße kommen alle der fachkundigen Person bekannten Rußtypen in Frage.

In einer Ausführungsform hat der Ruß eine Jodzahl, gemäß ASTM D 1510, die auch als Jodadsorptionszahl bezeichnet wird, zwischen 30 und 250 g/kg, bevorzugt 30 bis 180 g/kg, besonders bevorzugt 40 bis 180 g/kg, und ganz besonders bevorzugt 40 bis 130 g/kg, und eine DBP-Zahl gemäß ASTM D 2414 von 30 bis 200 ml/100 g, bevorzugt 70 bis 200 ml/100g, besonders bevorzugt 90 bis 200 ml/100g.

Die DBP-Zahl gemäß ASTM D 2414 bestimmt das spezifische Absorptionsvolumen eines Rußes oder eines hellen Füllstoffes mittels Dibutylphthalat.

Die Verwendung eines solchen Rußtyps in der Kautschukmischung, insbesondere für Fahrzeugreifen, gewährleistet einen bestmöglichen Kompromiss aus Abriebwiderstand und Wärmeaufbau, der wiederum den ökologisch relevanten Rollwiderstand beeinflusst. Bevorzugt ist hierbei, wenn lediglich ein Rußtyp in der jeweiligen Kautschukmischung verwendet wird, es können aber auch verschiedene Rußtypen in die Kautschukmischung eingemischt werden. Die Gesamtmenge an enthaltenen Rußen beträgt bevorzugt 0 bis 250 phr.

Gemäß einer vorteilhaften Ausführungsform der Erfindung enthält die Kautschukmischung 0 bis 20 phr, bevorzugt 0 bis 10 phr wenigstens eines Rußes und 40 bis 500 phr, bevorzugt 40 bis 100 phr wenigstens einer Kieselsäure.

Die erfindungsgemäße Kautschukmischung kann, bevorzugt möglichst geringe Mengen d.h. bevorzugt 0 bis 20 phr, besonders bevorzugt 0 bis 10 phr, weitere Füllstoffe enthalten. Zu den weiteren (nicht verstärkenden) Füllstoffen zählen im Rahmen der vorliegenden Erfindung Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).

Weitere ggf. verstärkende Füllstoffe sind z.B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filler".

Zinkoxid gehört im Rahmen der vorliegenden Erfindung nicht zu den Füllstoffen. Erfindungsgemäß enthält die Kautschukmischung wenigstens ein Silan B mit der allgemeinen Summenformel I)

I) (R¹)ₒSi-R²-Sₙ-R²-Si(R¹)ₒ,

mit den obigen Definitionen.

Das wenigstens eine erfindungsgemäß enthaltene Silan B ist durch die Sₙ-Gruppe und dadurch, dass n wenigstens 2 ist, ein Silan, welches mittels der Schwefelgruppe Sₙ an Polymere anbinden kann. Dabei ist n eine ganze Zahl von 2 bis 10, bevorzugt 2 bis 8, besonders bevorzugt 2 bis 6, wobei auch ein Gemisch von verschiedenen Molekülen mit unterschiedlichen Werten für n vorliegen kann.

Ganz besonders bevorzugt ist n eine ganze Zahl von 2 bis 4.

Gemäß einer besonders vorteilhaften Ausführungsform der Erfindung ist n gleich 2. Gemäß einer weiteren besonders vorteilhaften Ausführungsform der Erfindung ist n gleich 4.

Erfindungswesentlich können zudem die Reste R² unabhängig voneinander gleich oder verschieden sein und sind unverzweigte Alkylengruppen mit 6 bis 20 Kohlenstoffatomen, bevorzugt 6 bis 10 Kohlenstoffatomen.

Überraschenderweise hat sich herausgestellt, dass durch eine Verlängerung der Reste R² von insbesondere Propyl mit drei Kohlenstoffatomen, wie in Silanen wie TESPD (3,3'-Bis(triethoxysilylpropyl)disulfid) oder TESPT (3,3'-Bis(triethoxysilylpropyl)tetrasulfid), auf 6 bis 20 Kohlenstoffatome, die der Erfindung zugrunde liegende Aufgabe gelöst wird.

Besonders bevorzugt ist R² auf beiden Seiten gleich und dabei wiederum bevorzugt eine -(CH₂)₈-Gruppe.

Sämtliche genannte Reste R¹ und Verbrückungen von einem oder mehreren Silanen über Reste R¹ können innerhalb einer Silyl-Gruppe miteinander kombiniert sein.

Für den Fall, dass zwei R¹ einer Dialkoxygruppe mit 2 bis 10 Kohlenstoffatomen entsprechen und dann o < 3 (o kleiner drei) ist, ist das Siliziumatom Teil eines Ringsystems.

Für den Fall, dass zwei Silane gemäß Formel I) miteinander verbrückt sind, teilen sie sich einen Rest R¹ oder sind durch Kombination zweier Si-R¹-Gruppen miteinander über ein Sauerstoffatom verknüpft. Auf diese Weise können auch mehr als zwei Silane aneinander verknüpft sein. Im Anschluss an die Synthese des Silans gemäß Formel I) ist es somit denkbar, dass zwei Silane gemäß Formel I) über ein Sauerstoffatom oder die Reste R¹ miteinander verbrückt werden. Auf diese Weise können auch mehr als zwei Silane aneinander verknüpft werden, wie beispielsweise über Dialkoxygruppen.

Die erfindungsgemäße Kautschukmischung kann somit auch Oligomere, die durch Hydrolyse und Kondensation oder durch Verbrücken mittels Dialkoxygruppen als R¹ der Silane B entstehen, enthalten.

Das Silan gemäß Formel I) umfasst durch die Bedingung, dass in jeder (R¹)ₒSi-Gruppe wenigstens ein R¹ aus denjenigen oben genannten Möglichkeiten ausgewählt ist, bei der dieses R¹ i) über ein Sauerstoffatom an das Siliziumatom gebunden ist oder ii) ein Halogenid ist, in jeder (R¹)ₒSi-Gruppe jeweils wenigstens einen Rest R¹, der als Abgangsgruppe dienen kann.

Insbesondere sind dies somit Alkoxy-Gruppen, Phenoxy-Gruppen oder sämtliche andere der genannten Gruppen, die mit einem Sauerstoffatom an das Siliziumatom gebunden sind, oder Halogenide.

Es ist bevorzugt, dass die Reste R¹ Alkylgruppen mit 1 bis 10 Kohlenstoffatomen oder Alkoxygruppen mit 1 bis 10 Kohlenstoffatomen oder Halogenide umfassen, besonders bevorzugt sind Alkoxygruppen mit 1 bis 6 Kohlenstoffatomen.

Bevorzugt ist in jeder (R¹)ₒSi-Gruppe wenigstens ein R¹ eine Alkoxygruppe mit 1 bis 10 Kohlenstoffatomen, besonders bevorzugt mit 1 bis 6 Kohlenstoffatomen.

Bevorzugt ist o auf beiden Seiten des Moleküls gleich 3.

Gemäß einer besonders vorteilhaften Ausführungsform der Erfindung sind die Reste R¹ innerhalb einer Silylgruppe (R¹)ₒSi- gleich und Alkoxygruppen mit 1 bis 3 Kohlenstoffatomen, wiederum bevorzugt 1 oder 2 Kohlenstoffatomen, also Methoxygruppen oder Ethoxygruppen, ganz besonders bevorzugt Ethoxygruppen, wobei o gleich 3 ist.

Aber auch bei Oligomeren oder im Fall, dass zwei R¹ eine Dialkoxy-Gruppe bilden, sind die übrigen Reste R¹ bevorzugt Alkylgruppen mit 1 bis 6 Kohlenstoffatomen oder Halogenide oder Alkoxygruppen mit 1 bis 6 Kohlenstoffatomen, bevorzugt 1 oder 2 Kohlenstoffatomen, also Methoxygruppen oder Ethoxygruppen, ganz besonders bevorzugt Ethoxygruppen.

Im Rahmen der vorliegenden Erfindung werden Ethoxygruppen in den Formeln der Silane mit EtO bzw. OEt abgekürzt dargestellt. Die beiden Schreibweisen verdeutlichen, dass Alkoxygruppen, wie Ethoxygruppen, über das Sauerstoffatom O an das Siliziumatom Si gebunden sind.

Prinzipiell können die Abkürzungen OEt und EtO aber im Rahmen der vorliegenden Erfindung synonym verwendet werden.

Gemäß einer bevorzugten Ausführungsform der Erfindung hat das Silan B die folgende Struktur gemäß Formel II):

II) (EtO)₃Si-(CH₂-)₈S₄-(CH₂-)₈Si(EtO)₃

wobei EtO für Ethoxygruppe steht.

Gemäß einer weiteren bevorzugten Ausführungsform der Erfindung hat das Silan B die folgende Struktur gemäß Formel III):

III) (EtO)₃Si-(CH₂-)₈S₂-(CH₂-)₈Si(EtO)₃

wobei EtO für Ethoxygruppe steht.

Insbesondere mit Silanen der Formel II) und/oder III) wird die der Erfindung zugrunde liegende Aufgabe besonders gut gelöst.

Das Silan gemäß Formel III) ist beispielsweise in der EP 3567078 A1 oder der EP 3312232 A1 offenbart. Es wird insbesondere gemäß der Vorschrift in Absatz [0097] in Verbindung mit Absatz [0095] der EP 3567078 A1 hergestellt, wobei 1 mol Schwefel verwendet werden.

Das Silan gemäß Formel II) wird auf analoge Weise hergestellt und insbesondere dadurch, dass bei der Herstellung gemäß [0095] der EP 3567078 A1 Schwefel in einer Menge von 3 mol anstelle von 1,2 mol eingesetzt wird.

Es ist auch denkbar, dass die erfindungsgemäße Kautschukmischung ein Gemisch zweier Silane der Formel I), wie z. B. das Silan gemäß Formel II) mit dem Silan gemäß Formel III) enthält.

Die Gesamtmenge an enthaltenen Silanen B, die unter die Formel I) fallen, beträgt bevorzugt 0,1 bis 30 phf, bevorzugt 0,5 bis 20 phf, besonders bevorzugt 0,5 bis 15 phf.

Insbesondere mit den bevorzugten und besonders bevorzugten Mengen und Weiterbildungen bzw. Ausführungsformen ergeben sich eine verbesserte Prozessfähigkeit (Prozessierbarkeit) und verbesserte Eigenschaften hinsichtlich des Wärmeaufbaus und der Reißeigenschaften.

Das oder die erfindungsgemäß enthaltenen Silan(e) B kann/können auf einem Träger, beispielsweise Wachs, Polymer oder Ruß, aufgebracht sein, und in dieser Form der Kautschukmischung zugegeben sein. Das oder die erfindungsgemäß enthaltenen Silan(e) B kann/können auf einer Kieselsäure aufgebracht sein, wobei die Anbindung physikalisch oder chemisch erfolgt sein kann.

Die Aufbringung der erfindungsgemäß enthaltenen Silane B auf Kieselsäure verringert z.B. den Ausstoß von flüchtigen Nebenprodukten, wie Ethanol bei der Verwendung von Ethoxy-substituierten Silanen (R¹ = Ethoxy).

Ferner ist es denkbar, dass die erfindungsgemäße Kautschukmischung wenigstens ein weiteres Silan-Kupplungsagens enthält, welches nicht ein Silan B ist.

Weiterhin kann die Kautschukmischung weitere Aktivatoren und/oder Agenzien für die Anbindung von Füllstoffen, insbesondere Ruß, enthalten. Hierbei kann es sich beispielsweise um die z.B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Ruß als Füllstoff sehr gute physikalische Eigenschaften der Kautschukmischung ergeben.

Die erfindungsgemäße Kautschukmischung ist gemäß bevorzugter Ausführungsformen zur Ummantelung (Gummierung) von Festigkeitsträgern ausgelegt. Hierzu enthält sie bevorzugt ein Haftsystem zur Anbindung der Kautschukmischung an textile oder metallische Festigkeitsträger.

Je nachdem, ob die Mischung für textile oder metallische Festigkeitsträger eingesetzt werden soll, kommt entweder ein Haftsystem für die Gummi-Textil-Haftung oder ein Haftsystem für die Gummi-Metall-Haftung zur Anwendung.

Vorzugsweise ist das Haftsystem ein Stahlcordhaftsystem auf der Basis von einer Cobaltverbindung, insbesondere ausgewählt aus organischen Cobaltsalzen, und Verstärkerharzen und mehr als 2,5 phr Schwefel. Haben derartige Mischungen Kontakt mit metallischen Festigkeitsträgern, wirkt sich die Verbesserung der Haftung und des Rissverhaltens besonders positiv aus, da die metallischen Festigkeitsträgern bei Haftungsverlust und Rissbildung verstärkt der Korrosion ausgesetzt sind, was die Lebensdauer der Elastomer-Erzeugnisse, insbesondere Fahrzeugluftreifen, stark beeinträchtigt.

Die organischen Cobaltsalze werden üblicherweise in Mengen von 0,1 bis 3 phr eingesetzt. Als Cobaltsalze können z. B. Cobaltstearat, -borat, -boratalkanoate, -naphthenat, -rhodinat, -octoat, -adipat usw. verwendet werden. Als Verstärkerharze können Resorcin-Formaldehyd-Harze, beispielsweise Resorcin-Hexamethoxymethylmelamin-Harze (HMMM) oder Resorcin-Hexamethylentetramin-Harze (HEXA), oder modifizierte Phenolharze, beispielsweise Alnovol^{®}-Typen, eingesetzt werden. Von den Resorcin-Harzen können auch die Vorkondensate eingesetzt werden.

Die erfindungsgemäße Kautschukmischung enthält 2,5 bis 8 phr Schwefel, bevorzugt 3 bis 8 phr Schwefel.

Gemäß vorteilhafter Ausführungsformen der Erfindung enthält die Kautschukmischung 3,5 bis 5 phr Schwefel.

Gemäß vorteilhafter Ausführungsformen der Erfindung enthält die Kautschukmischung ein Stahlcordhaftsystem auf der Basis von organischen Cobaltsalzen und Verstärkerharzen und mehr als 2,5 phr, insbesondere 3 bis 6 phr, Schwefel. Für die Cobaltsalze und Verstärkerharze gelten die obigen Ausführungen.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) und/oder sonstige Aktivatoren, wie Zinkkomplexe wie z.B. Zinkethylhexanoat,
c) Wachse,
d) Kohlenwasserstoffharze, wie ggf. insbesondere Klebharze
e) Mastikationshilfsmittel, wie z. B. 2,2'-Dibenzamidodiphenyldisulfid (DBD) und
f) Prozesshilfsmittel, wie insbesondere Fettsäureester und Metallseifen, wie z.B. Zinkseifen und/oder Calciumseifen
g) Weichmacher.

Zu den im Rahmen der vorliegenden Erfindung verwendeten Weichmachern gehören alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubberto-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Triglyceride, wie z. B. Rapsöl, oder Faktisse oder Kohlenwasserstoffharze oder Flüssig-Polymere, deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung zusätzliche Flüssig-Polymere als Weichmacher eingesetzt, so gehen diese nicht als Kautschuk in die Berechnung der Zusammensetzung der Polymermatrix ein.

Der Weichmacher ist bevorzugt ausgewählt aus der Gruppe bestehend aus den oben genannten Weichmachern.

Der Weichmacher ist besonders bevorzugt ausgewählt aus der Gruppe bestehend aus Kohlenwasserstoffharzen, Flüssig-Polymeren und Mineralölen.

Bei der Verwendung von Mineralöl ist dieses bevorzugt ausgewählt aus der Gruppe, bestehend aus DAE (Distillate Aromatic Extracts) und/oder RAE (Residual Aromatic Extract) und/oder TDAE (Treated Distillate Aromatic Extracts) und/oder MES (Mild Extracted Solvents) und/oder naphthenische Öle.

Gemäß einer bevorzugten Ausführungsform der Erfindung enthält die Kautschukmischung wenigstens ein Mineralölweichmacher, bevorzugt wenigstens TDAE und/oder RAE als Weichmacher. Hiermit ergeben sich besonders gute Prozessierbarkeiten, insbesondere eine gute Mischbarkeit der Kautschukmischung.

Gemäß einer bevorzugten Ausführungsform der Erfindung enthält die Kautschukmischung wenigstens ein Flüssig-Polymer als Weichmacher.

Gemäß einer bevorzugten Ausführungsform der Erfindung enthält die Kautschukmischung wenigstens ein Kohlenwasserstoffharz als Weichmacher.

Dem Fachmann ist klar, dass Kohlenwasserstoffharze Polymere sind, die aus Monomeren aufgebaut sind, wobei das Kohlenwasserstoffharz durch die Verknüpfung der Monomere zueinander formal aus Derivaten der Monomere aufgebaut ist. Diese Kohlenwasserstoffharze zählen im Rahmen der vorliegenden Erfindung jedoch nicht zu den Kautschuken. Der Begriff "Kohlenwasserstoffharze" umfasst im Rahmen der vorliegenden Anmeldung Harze, die Kohlenstoffatome und Wasserstoffatome aufweisen sowie optional Heteroatome, wie insbesondere Sauerstoffatome, aufweisen können. Das Kohlenwasserstoffharz kann ein Homopolymer oder ein Copolymer sein.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe kann Zinkoxid (ZnO) enthalten sein. Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch ein Zinkoxid mit einer BET-Oberfläche von 10 bis 100 m²/g, wie z.B. so genannte "nano-Zinkoxide", verwendet werden.

Gemäß vorteilhafter Ausführungsformen der Erfindung enthält die Kautschukmischung 1 bis 10 phr, bevorzugt 3 bis 10 phr, besonders bevorzugt 7 bis 9 phr Zinkoxid.

Die Vulkanisation wird bevorzugt in Anwesenheit von Schwefel und/oder Schwefelspendern und mit Hilfe von Vulkanisationsbeschleunigern durchgeführt, wobei einige Vulkanisationsbeschleuniger zugleich als Schwefelspender wirken können.

Schwefel und/oder weitere Schwefelspender sowie ein oder mehrere Beschleuniger werden im letzten Mischungsschritt der Kautschukmischung zugesetzt. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung wenigstens eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

In bevorzugten Ausführungsformen der Erfindung enthält die Kautschukmischung DCBS als Beschleuniger. Dieser erweist sich aufgrund der vergleichsweise langsamen Reaktionskinetik besonders vorteilhaft für die Stahlcordhaftung der Kautschukmischung.

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z. B. Thiuramdisulfide, wie z. B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z. B. Dipentamethylenthiuramtetrasulfid (DPTT), und/oder Dithiophosphate, wie z. B.

DipDis (Bis-(Diisopropyl)thiophosphoryldisulfid) und/oder Bis(O,O-2-ethylhexyl-thiophosphoryl)Polysulfid (z. B. Rhenocure SDT 50^{®}, Rheinchemie GmbH) und/oder Zinkdichloryldithiophosphat (z. B. Rhenocure ZDT/S^{®}, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger.

Die erfindungsgemäße Kautschukmischung wird zur Herstellung von Fahrzeugreifen, und zur Herstellung von Riemen, Gurten und Schläuchen verwendet.

Insbesondere dient die Kautschukmischung zur Herstellung wenigstens eines inneren Bauteils eines Fahrzeugreifens. Bei den Fahrzeugreifen kann es sich um alle denkbaren Reifen-Typen handeln, in denen Festigkeitsträger verwendet werden.

Ein weiterer Aspekt der Erfindung ist ein Festigkeitsträger, der mit der erfindungsgemäßen Kautschukmischung ummantelt ist.

Für die Bestandteile der erfindungsgemäßen Kautschukmischung gelten sämtliche obige Ausführungen.

Der erfindungsgemäße Festigkeitsträger ist bevorzugt aus wenigstens einem Stahl aufgebaut.

Die erfindungsgemäße Kautschukmischung ist insbesondere eine Stahlcordgummierungsmischung, wobei sich die mit der Erfindung verbundenen Vorteile bei einer guten Haftung der Kautschukmischung an Stahl ergeben.

Bei dem Festigkeitsträger aus Stahl kann es sich prinzipiell um jeglichen dem Fachmann bekannten Festigkeitsträger aus Stahl handeln. Hierbei kann der Fachmann insbesondere die Konstruktion des Festigkeitsträgers sowie die Bruchfestigkeitsklasse wählen.

Die Herstellung der Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt.

Im Fall einer Gummierungsmischung wird der Festigkeitsträger teilweise oder vollständig mit der erfindungsgemäßen Kautschukmischung ummantelt. Dies geschieht durch Kalandrieren der Kautschukmischung, bei der aus der Kautschukmischung dünne Platten hergestellt werden, welche oben und unten auf den Festigkeitsträger gebracht werden. Dabei erfolgt die Penetration der Kautschukmischung an und in die Festigkeitsträger. Nach Zuschnitt werden diese mit der Kautschukmischung versehenen Festigkeitsträger wie der fachkundigen Person bekannt zum Herstellen der benötigten Endprodukte weiterverwendet.

Die Herstellung der erfindungsgemäßen Kautschukmischung zur Verwendung als Laufstreifen, Seitenwand oder sonstige Body- Mischung in Fahrzeugreifen erfolgt wie bereits beschrieben. Der Unterschied liegt in der Formgebung nach dem Extrusionsvorgang bzw. dem Kalandrieren der Mischung. Die so erhaltenen Formen der noch unvulkanisierten Kautschukmischung für eine oder mehrere unterschiedliche Body-Mischungen, Seitenwand oder Laufstreifen dienen dann dem Aufbau eines Reifenrohlings.

Die Erfindung soll nun anhand von Vergleichs- und Ausführungsbeispielen, die in Tabelle 1 zusammengefasst sind, näher erläutert werden.

Die erfindungsgemäße Kautschukmischung (E1) und Vergleichsmischung (V1) stellen dabei jeweils Gummierungsmischungen für Stahlcorde dar.

Die Mengenangabe der Silane in phf bezieht sich auf 60 phr Kieselsäure.

Bei E1 gegenüber V1 erfolgte ein molgleicher Austausch des Silans, weswegen sich unterschiedliche Mengen in phf ergeben.

Die Mischungsherstellung erfolgte ansonsten nach dem in der Kautschukindustrie üblichen Verfahren unter üblichen Bedingungen in drei Stufen in einem Labormischer mit 300 Milliliter bis 3 Liter Volumen, bei dem zunächst in der ersten Mischstufe (Grundmischstufe) alle Bestandteile außer dem Vulkanisationssystem (Schwefel und vulkanisationsbeeinflussende Substanzen) für 200 bis 600 Sekunden bei 145 bis 165 °C, Zieltemperaturen von 152 bis 157 °C, vermischt wurden. In der zweiten Stufe wurde die Mischung aus Stufe 1 noch einmal durchmischt, es wurde ein sogenannter Remill durchgeführt. Durch Zugabe des Vulkanisationssystems in der dritten Stufe (Fertigmischstufe) wurde die Fertigmischung erzeugt, wobei für 180 bis 300 Sekunden bei 90 bis 120 °C gemischt wurde.

Aus sämtlichen Mischungen wurden Prüfkörper durch Vulkanisation nach t₉₅ bis t₄₀₀ (gemessen am Moving Die Rheometer gemäß ASTM D 5289-12/ ISO 6502) unter Druck bei 160°C bis 170 °C hergestellt und mit diesen Prüfkörpern für die Kautschukindustrie typische Materialeigenschaften mit den im Folgenden angegebenen Testverfahren ermittelt.
- Mooney-Viskosität (Visk.) (ML 1+4) 100°C gemäß ASTM D 1646 (2004)
- Rückprallelastizität bei Raumtemperatur (RT) gemäß DIN 53 512 und ISO 4662
- Zugfestigkeit und Bruchdehnung bei 100 °C gemäß DIN 53 504
- Maximaler Verlustfaktor tan d, synonym zu tan δ max., sowie dynamischer Speichermodul E' bei 55 °C und 100 °C aus dynamisch-mechanischer Messung gemäß DIN 53 513, Dehnungsdurchlauf (*engl*. "strain sweep") bei 0,15 % sowie 8 % Dehnung
- Haftung (Rubber Coverage bei Raumtemperatur RT, mean) und Auszugskraft (Pullout Force, mean) gemäß ASTM D2229-10, Verwendeter Cord: 1+5*0,4 HT (High tensile)

Die Angaben der Zugfestigkeit 100 °C, Reißdehnung 100 °C, Auszugskraft und Bedeckung erfolgen jeweils in Performance-Prozentangaben, wobei jeweils die Performance für V1 auf 100 % normiert ist.

### Verwendete Substanzen

a) Kieselsäure: Hi-Sil EZ 160G, PPG
b) Prozesshilfsmittel und Weichmacher: Öl und Kohlenwasserstoffharz (Weichmacherharz)
c) II) (EtO)₃Si-(CH₂-)₈S₄-(CH₂-)₈Si(EtO)₃ , hergestellt gemäß [0095] der EP 3567078 A1, wobei Schwefel in einer Menge von 3 mol anstelle von 1,2 mol verwendet wurde
d) Cobaltsalz: Co-Borat-Alkanoat, 22,5 Gew.-% Cobalt

Wie an Tabelle 1 erkennbar wird mit der erfindungsgemäßen Kautschukmischung E1 enthaltend ein Silan B) im Vergleich zu V1 enthaltend TESPT ein geringerer Wärmeaufbau, erkennbar an den geringeren Werten für den Hystereseverlust tan d max. bei 55 °C und der erhöhten Rückprallelastizität, erzielt. Gleichzeitig sind die Reißeigenschaften, insbesondere Zugfestigkeit und Bruchdehnung, bei 100 °C verbessert.

Ein Grund hierfür dürfte die in E1 verbesserte Füllstoffdispersion sein, die man an dem verringerten Payne-Effekt (siehe E'(0,15 %) - E'(8%) DKF 55 °C)) erkennen kann.

Die genannten Eigenschaften bei den erhöhten Temperaturen sind besonders für die Haltbarkeit trotz Beanspruchungen im Fahrbetrieb relevant und aussagekräftig, da sich insbesondere die inneren Reifenbauteile im Fahrbetrieb ausgehend von Umgebungstemperatur erwärmen (können).

Zudem weist E1 eine verringerte Mooney-Viskosität und damit eine bessere Verarbeitbarkeit auf. Gleichzeitig wird die Stahlcordhaftung nicht negativ beeinträchtigt, wie an der Auszugskraft und Bedeckung erkennbar ist.

Ein Fahrzeugreifen, der wenigstens eine erfindungsgemäße Kautschukmischung in wenigstens einem Bauteil, insbesondere in einem inneren Bauteil und dabei beispielsweise und insbesondere als Gürtelgummierung aufweist, zeichnet sich durch eine erhöhte Langlebigkeit und Haltbarkeit sowie einen geringeren und damit verbesserten Rollwiderstand aus.

**Tabelle 1**

| **Bestandteile** | **Einheit** | **V1** | **E1** |
|---|---|---|---|
| Natürliches Polyisopren | phr | 80 | 80 |
| Polybutadien | phr | 20 | 20 |
| Kieselsäure ^{a)} | phr | 60 | 60 |
| Prozesshilfsm. + Weichmacher ^{b)} | phr | 7,5 | 7,5 |
| Silan TESPT | phf | 8,6 | - |
| Silan B, Formel II) ^{c)} | phf | - | 11,4 |
| Alterungsschutzmittel | phr | 4 | 4 |
| Zinkoxid | phr | 8 | 8 |
| Beschleuniger | phr | 1,5 | 1,5 |
| Schwefel | phr | 4,3 | 4,3 |
| Cobaltsalz ^{d)} | phr | 0,4 | 0,4 |
| Verstärkerharz | phr | 5 | 5 |
| Mooney-Viskosität | Mooney-Einheiten | 69 | 56 |
| Rückprallelast. b. RT | % | 44 | 45 |
| Zugfestigkeit 100 °C | % | 100 | 120 |
| Reißdehnung 100 °C | % | 100 | 118 |
| E'(0,15 %) - E'(8%) DKF 55 °C | MPa | 7,6 | 5,7 |
| tan d (max.) 55 °C | MPa | 0,129 | 0,121 |
| Auszugskraft | % | 100 | 102 |
| Bedeckung | % | 100 | 95 |

## Patentansprüche

1. Schwefelvernetzbare Kautschukmischung enthaltend wenigstens folgende Bestandteile:
- 50 bis 100 phr wenigstens eines Polyisoprens, welches ausgewählt ist aus der Gruppe bestehend aus natürlichem und synthetischem Polyisopren und
- 5 bis 500 phr wenigstens einer Kieselsäure und
- 2,5 bis 8 phr Schwefel und
- wenigstens ein Silan B mit der allgemeinen Summenformel I)
I) (R¹)ₒSi-R²-Sₙ-R²-Si(R¹)ₒ
wobei die beiden o unabhängig voneinander gleich oder verschieden sein können und jeweils einen Wert von 1, 2 oder 3 annehmen und die Reste R¹ unabhängig voneinander gleich oder verschieden voneinander sein können und ausgewählt sind aus Alkoxygruppen mit 1 bis 10 Kohlenstoffatomen, Cycloalkoxygruppen mit 4 bis 10 Kohlenstoffatomen, Phenoxygruppen mit 6 bis 20 Kohlenstoffatomen, Arylgruppen mit 6 bis 20 Kohlenstoffatomen, Alkylgruppen mit 1 bis 10 Kohlenstoffatomen, Alkenylgruppen mit 2 bis 20 Kohlenstoffatomen, Alkinylgruppen mit 2 bis 20 Kohlenstoffatomen, Aralkylgruppen mit 7 bis 20 Kohlenstoffatomen, Halogeniden oder Alkylpolyethergruppen -O-(R⁶-O)ᵣ-R⁵ wobei R⁶ gleich oder verschieden sind und verzweigte oder unverzweigte, gesättigte oder ungesättigte, aliphatische, aromatische oder gemischt aliphatisch/aromatische verbrückende C₁-C₃₀-Kohlenwasserstoffgruppen sind, vorzugsweise -CH₂-CH₂-, r eine ganze Zahl von 1 bis 30, vorzugsweise 3 bis 10 ist, und R⁵ unsubstituierte oder substituierte, verzweigte oder unverzweigte, terminale Alkyl-, Alkenyl-, Aryl- oder Aralkylgruppen, vorzugsweise -C₁₃H₂₇ Alkyl-Gruppe, sind
oder
zwei R¹ bilden eine cyclische Dialkoxygruppe mit 2 bis 10 Kohlenstoffatomen wobei dann o < 3 ist,
oder es können zwei oder mehr Silane gemäß Formel I) über Reste R¹ verbrückt sein, und
wobei die Bedingung gilt, dass in Formel I) in jeder (R¹)ₒSi-Gruppe wenigstens ein R¹ aus denjenigen oben genannten Möglichkeiten ausgewählt ist, bei der dieses R¹ i) über ein Sauerstoffatom an das Siliziumatom gebunden ist oder ii) ein Halogenid ist;
und die Reste R² unabhängig voneinander gleich oder verschieden sein können und unverzweigte Alkylengruppen mit 6 bis 20 Kohlenstoffatomen, bevorzugt 6 bis 10 Kohlenstoffatomen, sind,
und wobei n eine ganze Zahl von 2 bis 10 ist.

2. Kautschukmischung nach Anspruch 1, **dadurch gekennzeichnet, dass** R² auf beiden Seiten gleich und eine -(CH₂)₈-Gruppe ist.

3. Kautschukmischung nach einem der Ansprüche 1 oder 2, **dadurch gekennzeichnet, dass** in jeder (R¹)ₒSi-Gruppe wenigstens ein R¹ eine Alkoxygruppe mit 1 bis 10 Kohlenstoffatomen ist.

4. Kautschukmischung nach einem der vorherigen Ansprüche, **dadurch gekennzeichnet, dass** o auf beiden Seiten des Moleküls gleich 3 ist.

5. Kautschukmischung nach Anspruch 4, **dadurch gekennzeichnet, dass** alle R¹ auf beiden Seiten des Moleküls und innerhalb einer (R¹)ₒSi-Gruppe gleich und Alkoxygruppen mit 1 bis 3 Kohlenstoffatomen sind.

6. Kautschukmischung nach Anspruch 5, **dadurch gekennzeichnet, dass** alle R¹ auf beiden Seiten des Moleküls und innerhalb einer (R¹)ₒSi-Gruppe gleich und Ethoxygruppen sind.

7. Kautschukmischung nach einem der vorherigen Ansprüche, **dadurch gekennzeichnet, dass** n eine ganze Zahl von 2 bis 8, bevorzugt 2 bis 6 ist.

8. Kautschukmischung nach einem der vorherigen Ansprüche, **dadurch gekennzeichnet, dass** das Silan B die folgende Struktur gemäß Formel II) hat:
II) (EtO)₃Si-(CH₂-)₈S₄-(CH₂-)₈Si(EtO)₃
wobei EtO für Ethoxygruppe steht.

9. Kautschukmischung nach einem der Ansprüche 1 bis 7, **dadurch gekennzeichnet, dass** das Silan B die folgende Struktur gemäß Formel III) hat:
III) (EtO)₃Si-(CH₂-)₈S₂-(CH₂-)₈Si(EtO)₃
wobei EtO für Ethoxygruppe steht.

10. Kautschukmischung nach einem der vorherigen Ansprüche, **dadurch gekennzeichnet, dass** sie 0,1 bis 30 phf Silan B enthält.

11. Kautschukmischung nach einem der vorherigen Ansprüche, **dadurch gekennzeichnet, dass** sie zur Ummantelung von Festigkeitsträgern ausgelegt ist und hierzu ein Haftsystem zur Anbindung der Kautschukmischung an textile oder metallische Festigkeitsträger enthält.

12. Vulkanisat, welches durch die Schwefelvulkanisation wenigstens einer Kautschukmischung nach einem der Ansprüche 1 bis 11 erhalten ist.

13. Fahrzeugreifen, **dadurch gekennzeichnet, dass** er in wenigstens einem Bauteil wenigstens ein Vulkanisat nach Anspruch 12 aufweist.

14. Fahrzeugreifen nach Anspruch 13, **dadurch gekennzeichnet, dass** er wenigstens ein Vulkanisat nach Anspruch 12 wenigstens als Gummierungsmischung, insbesondere als Stahlcordgummierung und/oder Gürtelgummierung, und/oder in der Seitenwand und/oder im Laufstreifens und/oder in einem sonstigen Reifenbauteil, wie insbesondere einem Gürtelpolster, aufweist.

15. Verwendung einer Kautschukmischung nach einem der Ansprüche 1 bis 11 zur Herstellung eines Gummiartikels, insbesondere einer Luftfeder, eines Balgs, Förderbands, Gurtes, Riemens, Schlauchs, Gummibands, Profils, einer Dichtung, einer Membran, taktilen Sensoren für medizinische Anwendungen oder Roboteranwendungen, oder einer Schuhsohle oder Teilen davon.

## Claims

1. Sulfur-crosslinkable rubber mixture comprising at least the following constituents:
- 50 bis 100 phr of at least one polyisoprene selected from the group consisting of natural and synthetic polyisoprene and
- 5 to 500 phr of at least one silica and
- 2.5 to 8 phr of sulfur and
- at least one silane B having the general empirical formula I)
I) (R¹)ₒSi-R²-Sₙ-R²-Si(R¹)ₒ
where the two o may independently be the same or different and each assume a value of 1, 2 or 3 and the R¹ radicals may independently be the same or different and are selected from alkoxy groups having 1 to 10 carbon atoms, cycloalkoxy groups having 4 to 10 carbon atoms, phenoxy groups having 6 to 20 carbon atoms, aryl groups having 6 to 20 carbon atoms, alkyl groups having 1 to 10 carbon atoms, alkenyl groups having 2 to 20 carbon atoms, alkynyl groups having 2 to 20 carbon atoms, aralkyl groups having 7 to 20 carbon atoms, halides or alkyl polyether groups -O-(R⁶-O)ᵣ-R⁵ where R⁶ are the same or different and are branched or unbranched, saturated or unsaturated, aliphatic, aromatic or mixed aliphatic/aromatic bridging C₁-C₃₀ hydrocarbon groups, preferably -CH₂-CH₂-, r is an integer from 1 to 30, preferably 3 to 10, and R⁵ is unsubstituted or substituted, branched or unbranched, terminal alkyl, alkenyl, aryl or aralkyl groups, preferably - C₁₃H₂₇ alkyl group,
or
two R¹ form a cyclic dialkoxy group having 2 to 10 carbon atoms, in which case o is < 3,
or two or more silanes of formula I) may be bridged via R¹ radicals, and under the condition that, in formula I), in each (R¹)ₒSi- group, at least one R¹ is selected from those options mentioned above in which this R¹ i) is bonded to the silicon atom via an oxygen atom or ii) is a halide;
and the R² radicals may independently be the same or different and are unbranched alkylene groups having 6 to 20 carbon atoms, preferably 6 to 10 carbon atoms,
and where n is an integer from 2 to 10.

2. Rubber mixture according to Claim 1, **characterized in that** R² is the same on either side and is a -(CH₂)₈- group.

3. Rubber mixture according to either of Claims 1 and 2, **characterized in that**, in each (R¹)ₒSi- group, at least one R¹ is an alkoxy group having 1 to 10 carbon atoms.

4. Rubber mixture according to any of the preceding claims, **characterized in that** o is 3 on either side of the molecule.

5. Rubber mixture according to Claim 4, **characterized in that** all R¹ are the same and are alkoxy groups having 1 to 3 carbon atoms on either side of the molecule and within an (R¹)ₒSi- group.

6. Rubber mixture according to Claim 5, **characterized in that** all R¹ on either side of the molecule and within an (R¹)ₒSi- group are the same and are ethoxy groups.

7. Rubber mixture according to any of the preceding claims, **characterized in that** n is an integer from 2 to 8, preferably 2 to 6.

8. Rubber mixture according to any of the preceding claims, **characterized in that** the silane B has the following structure of formula II):
II) (EtO)₃Si-(CH₂-)₈S₄-(CH₂-)₈Si(EtO)₃
where EtO represents ethoxy group.

9. Rubber mixture according to any of Claims 1 to 7, **characterized in that** the silane B has the following structure of formula III):
III) (EtO)₃Si-(CH₂-)₈S₂-(CH₂-)₈Si(EtO)₃
where EtO represents ethoxy group.

10. Rubber mixture according to any of the preceding claims, **characterized in that** it contains 0.1 to 30 phf of silane B.

11. Rubber mixture according to any of the preceding claims, **characterized in that** it is designed for ensheathing of strength members and for this purpose contains a bonding system for binding of the rubber mixture to textile or metallic strength members.

12. Vulcanizate obtained by the sulfur vulcanization of at least one rubber mixture according to any of Claims 1 to 11.

13. Vehicle tyre, **characterized in that** it includes at least one vulcanizate according to Claim 12 in at least one component.

14. Vehicle tyre according to Claim 13, **characterized in that** it comprises at least one vulcanizate according to Claim 12 at least as rubberizing mixture, especially as steel cord rubberization and/or belt rubberization, and/or in the sidewall and/or in the tread and/or in another tyre component, such as a belt cushion in particular.

15. Use of the rubber mixture according to any of Claims 1 to 11 for production of a rubber article, especially an air spring, a set of bellows, a conveyor belt, a belt, a drive belt, a hose, a rubber band, a profile, a seal, a membrane, tactile sensors for medical applications or robot applications, or a footwear sole or parts thereof.

## Revendications

1. Mélange de caoutchouc réticulable au soufre, contenant au moins les constituants suivants :
- 50 à 100 pcc (parties par cent parties de caoutchouc) d'au moins un polyisoprène, qui est choisi dans le groupe constitué par le polyisoprène naturel et le polyisoprène synthétique et
- 5 à 500 pcc d'au moins une silice et
- 2,5 à 8 pcc de soufre et
- au moins un silane B présentant la formule brute générale I)
I) (R¹)ₒSi-R²-Sₙ-R²-Si(R¹)ₒ
dans laquelle les deux indices o, indépendamment l'un de l'autre, peuvent être identiques ou différents et présentent à chaque fois une valeur 1, 2 ou 3 et les radicaux R¹, indépendamment les uns des autres, peuvent être identiques ou différents et sont choisis parmi les groupes alcoxy comprenant 1 à 10 atomes de carbone, les groupes cycloalcoxy comprenant 4 à 10 atomes de carbone, les groupes phénoxy comprenant 6 à 20 atomes de carbone, les groupes aryle comprenant 6 à 20 atomes de carbone, les groupes alkyle comprenant 1 à 10 atomes de carbone, les groupes alcényle comprenant 2 à 20 atomes de carbone, les groupes alcynyle comprenant 2 à 20 atomes de carbone, les groupes aralkyle comprenant 7 à 20 atomes de carbone, les halogénures ou les groupes alkylpolyéther -O-(R⁶-O)ᵣ-R⁵, où les radicaux R⁶ sont identiques ou différents et représentent des groupes hydrocarbonés en C₁-C₃₀, ramifiés ou non ramifiés, saturés ou insaturés, aliphatiques, aromatiques ou aliphatiques/aromatiques mixtes, formant un pont, de préférence -CH₂-CH₂, r représente un nombre entier de 1 à 30, de préférence de 3 à 10 et les radicaux R⁵ représentent des groupes alkyle, alcényle, aryle ou aralkyle non substitués ou substitués, ramifiés ou non ramifiés, en position terminale, de préférence un groupe alkyle en -C₁₃H₂₇,
ou
deux radicaux R¹ forment un groupe dialcoxy cyclique comprenant 2 à 10 atomes de carbone, o étant alors < 3,
ou deux silanes ou plus selon la formule I) peuvent être pontés par l'intermédiaire de radicaux R¹ et
la condition suivante s'appliquant : dans la formule I), dans chaque groupe (R¹)ₒSi, au moins un radical R¹ est choisi parmi les possibilités susmentionnées dans lesquelles ce radical R¹ i) est lié par l'intermédiaire d'un atome d'oxygène à l'atome de silicium ou ii) représente un halogénure ;
et les radicaux R², indépendamment l'un de l'autre, peuvent être identiques ou différents et représentent des groupes alkylène non ramifiés comprenant 6 à 20 atomes de carbone, de préférence 6 à 10 atomes de carbone,
et n représente un nombre entier de 2 à 10.

2. Mélange de caoutchouc selon la revendication 1, **caractérisé en ce que** R² sur les deux côtés est identique et représente un groupe -(CH₂)₈-.

3. Mélange de caoutchouc selon l'une des revendications 1 ou 2, **caractérisé en ce que** dans chaque groupe (R¹)ₒSi, au moins un R¹ représente un groupe alcoxy comprenant 1 à 10 atomes de carbone.

4. Mélange de caoutchouc selon l'une des revendications précédentes, **caractérisé en ce que** o sur les deux côtés de la molécule vaut 3.

5. Mélange de caoutchouc selon la revendication 4, **caractérisé en ce que** tous les R¹ sur les deux côtés de la molécule et au sein d'un groupe (R¹)ₒSi sont identiques et représentent des groupes alcoxy comprenant 1 à 3 atomes de carbone.

6. Mélange de caoutchouc selon la revendication 5, **caractérisé en ce que** tous les R¹ sur les deux côtés de la molécule et au sein d'un groupe (R¹)ₒSi sont identiques et représentent des groupes éthoxy.

7. Mélange de caoutchouc selon l'une des revendications précédentes, **caractérisé en ce que** n représente un nombre entier de 2 à 8, de préférence de 2 à 6.

8. Mélange de caoutchouc selon l'une des revendications précédentes, **caractérisé en ce que** le silane B présente la structure suivante selon la formule II) :
II) (EtO)₃Si-(CH₂-)₈S₄-(CH₂-)₈Si(EtO)₃
EtO représentant un groupe éthoxy.

9. Mélange de caoutchouc selon l'une des revendications 1 à 7, **caractérisé en ce que** le silane B présente la structure suivante selon la formule III) :
III) (EtO)₃Si-(CH₂-)₈S₂-(CH₂-)₈Si(EtO)₃
EtO représentant un groupe éthoxy.

10. Mélange de caoutchouc selon l'une des revendications précédentes, **caractérisé en ce qu'**il contient 0,1 à 30 parties par cent parties de charge de silane B.

11. Mélange de caoutchouc selon l'une des revendications précédentes, **caractérisé en ce qu'**il est conçu pour l'enrobage de renforts et contient à cette fin un système adhésif pour la liaison du mélange de caoutchouc sur des renforts textiles ou métalliques.

12. Produit de vulcanisation qui est obtenu par vulcanisation par le soufre d'au moins un mélange de caoutchouc selon l'une des revendications 1 à 11.

13. Pneumatique pour véhicule, **caractérisé en ce qu'**il présente dans au moins un composant au moins un produit de vulcanisation selon la revendication 12.

14. Pneumatique pour véhicule selon la revendication 13, **caractérisé en ce qu'**il contient au moins un produit de vulcanisation selon la revendication 12., au moins comme mélange de gommage, en particulier comme gommage de câble d'acier et/ou comme gommage de ceinture et/ou dans le flanc et/ou dans la bande de roulement et/ou dans un autre composant d'un pneumatique, tel qu'en particulier un rembourrage de ceinture.

15. Utilisation d'un mélange de caoutchouc selon l'une des revendications 1 à 11 pour la fabrication d'un article en caoutchouc, en particulier d'un ressort pneumatique, d'un soufflet, d'une bande transporteuse, d'une sangle, d'une courroie, d'un tuyau, d'une bande en caoutchouc, d'un profilé, d'un joint, d'une membrane, de capteurs tactiles pour des applications médicales ou robotiques ou d'une semelle de chaussure ou des parties de celle-ci.
